(19) Europäisches Patentamt
European Patent Office
Office européen des brevets

(11) EP 2 372 858 A2

(12) EUROPÄISCHE PATENTANMELDUNG

(43) Veröffentlichungstag:
05.10.2011 Patentblatt 2011/40

(51) Int Cl.:
H02H 3/33 (2006.01)

(21) Anmeldenummer: 11160781.8

(22) Anmeldetag: 01.04.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 01.04.2010 DE 102010013642

(71) Anmelder: Doepke Schaltgeräte GmbH & Co. KG
26506 Norden (DE)

(72) Erfinder:
• Grünebast, Günter
26506 Norden (DE)
• Schmidt, Manfred
26524 Berumbur (DE)

(74) Vertreter: Jabbusch, Matthias et al
Jabbusch Siekmann & Wasiljeff
Patentanwälte
Hauptstrasse 85
26131 Oldenburg (DE)

(54) Verfahren zum Kompensieren von durch Kapazitäten hervorgerufenen Ableitströmen und Differenzstromschutz- oder Überwachungseinrichtung

(57) Bei einem Verfahren zum Kompensieren von durch Kapazitäten hervorgerufenen Ableitströmen als Anteile in Strömen, die in einer Differenzstromschutz- oder Überwachungseinrichtung überwacht werden, ist vorgesehen, dass in einem geschlossenen Regelkreis aus dem zu überwachenden Strom und einem von der den Ableitstrom treibenden Spannung getriebenen Referenzstrom ein Kompensationsstrom gebildet wird, welcher durch den Regelvorgang auf die Amplitudenhöhe des kapazitiven Anteils im ungeregelten Differenzstrom angepasst ist und mit entgegengesetztem Vorzeichen dem ungeregelten Differenzstrom hinzugefügt wird, wobei der Referenzstrom und der geregelte Differenzstrom Eingangssignale eines Phasendetektors sind, dessen Ausgangssignal abhängig vom Zeitverschiebungswinkel zwischen beiden Eingangssignalen ist und einer stetig und monoton fallenden Funktion folgt, welche bei einem Wert des Zeitverschiebungswinkels eine Nullstelle ungerader Ordnung besitzt und bei einem Wert 0 ein Maximum aufweist und bei einem Wert $\Pi$ ein Minimum annimmt.

Fig. 1

EP 2 372 858 A2

**Beschreibung**

Die Erfindung betrifft ein Verfahren zum Kompensieren von durch Kapazitäten hervorgerufenen Ableitströmen als Anteile in Strömen, die in einer Differenzstromschutz- oder Überwachungseinrichtung überwacht werden.

Die Erfindung betrifft weiterhin eine Differenzstromschutz- oder Überwachungseinrichtung zur Durchführung des Verfahrens.

Das vorgenannte Verfahren sowie die vorgenannte Differenzstromschutz- oder Überwachungseinrichtung (RCD, engl. Residual Current Device bzw. RCM, engl. Residual Current Monitor) werden für bzw. in geerdeten Wechselstromnetzen eingesetzt. Mit Differenzstromschutzeinrichtungen werden Differenzströme festgestellt, die aus der Summe der zeitlichen Verläufe von Fehlerströmen und Ableitströmen entstanden sind. Fehlerströme treten aufgrund von Isolationsfehlern eines elektrischen Betriebsmittels auf. Ableitströme treten dagegen kurzzeitig oder stationär zum Beispiel über Entstörkondensatoren oder parasitäre Kapazitäten von Betriebsmitteln gegen Erde auf. Der zeitliche Mittelwert des Ableitstromes ist null, er kann neben der Netzfrequenz weitere Frequenzen aufweisen. Sein zeitlicher Verlauf entspricht dem Differenzialquotienten der Spannung nach der Zeit (erste Ableitung der Zeitfunktion) und eilt der periodisch verlaufenden Spannung zeitlich voraus.

Derartige Ableitströme können beispielsweise bei elektronischen Betriebsmitteln, die nicht zum Beispiel über Transformatoren galvanisch vom Netz getrennt sind, aufgrund von EMV-Maßnahmen mit breitem Frequenzspektrum auftreten.

Aus dem Stand der Technik bekannte handelsübliche Differenzstromschutz-und Überwachungseinrichtungen unterscheiden zwischen kapazitiven Ableitstrom und ohmschen Fehlerstrom nicht. Sie reagieren lediglich auf den Betragswert des gesamten Differenzstromes, der sich aus der orthogonalen Addition aller ohmschen Fehlerströme und aller Ableitblindströme der verschiedenen auftretenden Frequenzen ergibt. Dadurch kann in negativer Weise bei einem ausreichend hohen Ableitstrom eine Differenzstromschutz-und Überwachungseinrichtung ansprechen, obwohl gar kein Fehlerstrom vorliegt oder ein Fehlerstrom nur einen geringen Wert hat.

Weiterhin ist aus dem Stand der Technik ein Verfahren und eine Einrichtung zur Fehlerstromüberwachung nach DE 198 26 410 bekannt, bei dem eine Unterscheidung zwischen resisitiven (ohmschen) Fehlerströmen und kapazitiven Netzableitströmen in der Art durchgeführt wird, dass zunächst eine Trennung zwischen Gleich- und Wechselstromanteil im Differenzstrom erfolgt und dass ein Phasenwinkel zwischen dem Wechseldifferenzstrom und der treibenden Wechselspannung ermittelt wird, um hieraus den resistiven Wechselfehlerstrom zu ermitteln. Die geometrische Addition des Ergebnisses mit dem zuvor getrennten Gleichanteil des Differenzstromes ergibt den Gesamtfehlerstrom. Dadurch sollen unerwünschte durch kapazitive Ableitströme bedingte Auslösungen verhindert werden.

Nachteilig an der Erfindung nach DE 198 26 410 ist jedoch ein sehr großer Realisierungsaufwand. So muss zunächst in einem Differenzstromgemisch der Gleichstromanteil vom Wechselstromanteil getrennt werden. Weiterhin wird zur Ermittlung des resistiven Wechselstromanteils ein exakter Wert des Phasenwinkels $\cos \varphi$ zwischen dem Wechseldifferenzstrom und der treibenden Wechselspannung benötigt, da dieser unmittelbar multiplikativ in die Berechnung der Stromhöhe eingeht. Die dort vorgeschlagenen und bekannten Berechnungsverfahren erlauben aber nicht unmittelbar die Ermittlung des Phasenwinkels $\cos \varphi$, sondern nur eines Wertes $c * \cos \varphi$. Die Amplituden des Differenzstrom- und Spannungssignals bestimmen den Koeffizienten c. Um diesen Koeffizienten auf den Wert 1 zu normieren und konstant zu halten, sind aufwändige Maßnahmen zur Begrenzung oder Stabilisierung dieser Signale erforderlich. Nach einer Ermittlung des resistiven Wechselstromanteils muss dieser wieder geometrisch zum zuvor getrennten Gleichstromanteil addiert werden, um den Gesamtfehlerstrom zu erhalten. Der schon in einem einphasigen Netz beträchtliche Schaltungs- und Rechenaufwand steigt in einem Mehrleiternetz nahezu proportional mit der Anzahl der zu überwachenden Leiter an. Weiterhin lässt dieses Verfahren schaltungsbedingt keine zuverlässige Erfassung mit hoher Genauigkeit von resistiven Fehlerstromanteilen im Differenzstrom bei nichtsinusförmigen periodischen Signalen, also Signalen mit hohem Oberschwingungsgehalt, zu.

Der Erfindung liegt die Aufgabe zu Grunde, ein Verfahren der eingangs genannten Gattung aufzuzeigen, mit dem sich in idealer und einfacher Weise nur die ohmsche Komponente des zu überwachenden Stromes, also des ungeregelten Differenzstromes, feststellen lässt. Weiterhin soll eine Vorrichtung zur Durchführung des Verfahrens aufgezeigt werden.

Diese Aufgabe ist verfahrensseitig erfindungsgemäß dadurch gelöst, dass in einem geschlossenen Regelkreis aus dem zu überwachenden Strom und einem von der den Ableitstrom treibenden Spannung getriebenen Referenzstrom ein Kompensationsstrom gebildet wird, welcher durch den Regelvorgang auf die Amplitudenhöhe des kapazitiven Anteils im ungeregelten Differenzstrom angepasst ist und mit entgegengesetztem Vorzeichen dem ungeregelten Differenzstrom hinzugefügt wird, wobei der Referenzstrom und der geregelte Differenzstrom Eingangssignale eines Phasendetektors sind, dessen Ausgangssignal abhängig vom Zeitverschiebungswinkel zwischen beiden Eingangssignalen ist und einer stetig und monoton fallenden Funktion folgt, welche bei einem Wert des Zeitverschiebungswinkels eine Nullstelle ungerader Ordnung besitzt und bei einem Wert 0 ein Maximum aufweist und bei einem Wert $\Pi$ ein Minimum annimmt.

Mit dem erfindungsgemäßen Verfahren wird also der Ableitstromanteil des ungeregelten Differenzstromes, d. h. des zu überwachenden Stromes, durch eine Kompensation mit einem dem Ableitstrom gleichen Kompensationsstrom eliminiert, so dass lediglich der ohmsche Fehlerstrom übrig bleibt. Die Bildung des Kompensationsstromes wird dabei in einem geschlossenen Regelkreis durchgeführt.

Der Referenzstrom ist dem Ableitstrom im zeitlichen Verlauf ähnlich. Aus dem Referenzstrom wird durch den Regelvorgang ein Kompensationsstrom gebildet, der im zeitlichen Verlauf dem Ableitstrom gleich ist. Dabei stellt sich der zeitliche Versatz zwischen den Nulldurchgängen der beiden periodischen Signale des Referenzstromes und des geregelten Differenzstromes so ein, dass der Korrelationsfaktor zwischen diesen beiden Signalen im Idealfall Null ist, welches einer viertel Periodendauer bzw. einem Zeitverschiebungswinkel von $\Pi/2$ entspricht. Der geregelte Differenzstrom ist der zu überwachende Strom im geregelten Zustand, wenn also der Kompensationsstrom hinzugefügt wurde. Der Regelkreis führt mit hoher Genauigkeit einen selbsttätigen und schnellen Regelvorgang durch.

Mit Bezug auf die Zeichnungen wird nachfolgend die Erfindung anhand von ersten Ausführungsbeispielen erläutert. Die Figuren zeigen:

Fig.1: den Aufbau eines Regelkreises für die Durchführung des erfindungsgemäßen Verfahrens zum Kompensieren von Ableitströmen und

Fig. 2: eine Zeigerdarstellung für sinusförmige Signale im Regelkreis nach Fig. 1.

Bei diesem Verfahren wird durch einen selbsttätigen Regelvorgang zu dem periodischen, ansonsten aber beliebigen zeitveränderlichen und ungeregelten Differenzstrom $i_\Delta$, bestehend aus dem ohmschen Fehlerstrom $i_{\Delta R}$ und einem kapazitiven Ableitstrom $i_{\Delta C}$ ein dem Augenblickswert des Ableitstromes $i_{\Delta C}$ proportionaler, das heißt im mathematischen Sinn ähnlicher, Kompensationsstrom $i_{komp}$ in gerade solcher Höhe invers addiert, dass der kapazitive Ableitstromanteil $i_{\Delta c}$ * $= i_{\Delta c} + (- i_{komp})$ des geregelten Differenzstromes $i_\Delta$ *gegen Null geht. Im Idealfall entspricht der geregelte Differenzstrom $i_\Delta$ *dann nur noch dem ohmschen Fehlerstromanteil $i_{\Delta R}$,

Der Kompensationsstrom $i_{komp}$ wird dabei durch eine Multiplikation eines rein kapazitiven Referenzstromes $i_{Ref}$ mit einem variablen Faktor m gewonnen ,der sich durch den Regelvorgang so einstellt, dass der Kompensationsstrom $i_{komp}$ gleich dem Ableitstrom $i_{\Delta C}$ wird.

Der Referenzstrom $i_{Ref}$ muss daher nicht von gleicher Höhe sein wie der Ableitstrom $i_{\Delta C}$, sondern bezüglich der Spannung $u$ lediglich die gleiche Zeitverschiebung wie der Ableitstrom $i_{\Delta C}$ aufweisen. Er kann also in einfacher Weise mit Hilfe einer Referenzkapazität $C_{Ref}$ aus der auch den Ableitstrom treibenden Spannung

$u$ gewonnen werden.

Die Einstellung des variablen Faktors m auf den Wert, bei dem der Differenzstrom im Idealfall auf den reinen Wirkstrom reduziert ist, erfolgt in einem geschlossenen selbsttätigen Regelkreis, indem der Zeitverschiebungswinkel $\alpha$ zwischen dem Referenzstrom $i_{Ref}$ und dem geregelten Differenzstrom $i_\Delta$ * als Maß für die Regelabweichung dient. Der Referenzstrom $i_{Ref}$ und der geregelte Differenzstrom $i_\Delta$ * sind Eingangssignale eines Phasendetektors beispielsweise in Form eines Korrelators Korr. Der Zeitverschiebungswinkel $\alpha$ wird somit in bekannter Weise durch Ermittlung der Kreuzkorrelationsfunktion zwischen dem Referenzstrom $i_{Ref}$ und dem geregelten Differenzstrom $i_\Delta$*gebildet. $\alpha$ kann auch durch eine Synchrongleichrichtung von $i_\Delta$ *mit $i_{Ref}$ gebildet werden. Beide Verfahren liefern eine Funktion $r(\alpha) = c * cos(\alpha)$, wobei c ein Faktor ist, der sich aus den Amplituden der Signale $i_{Ref}$ und $i\Delta$ *ergibt. Die im Bereich $0 \leq \alpha \leq \Pi$ stetig und monoton verlaufende Funktion $r(\alpha) = c * cos(\alpha)$ nimmt an der Stelle $\alpha = \Pi/2$, entsprechend einer viertel Periodendauer, d. h. beim Übergang vom teilkompensierten zum überkompensierten Zustand den Wert Null an und wechselt dann das Vorzeichen. Sie eignet sich daher zu einer direkt proportionalen Steuerung des Kompensationsstromes und kann auch durch ein dem Phasendetektor Korr nachgeschaltetes PI - Glied PI eine zeitproportionale Stellgröße m erzeugen.

Da der Referenzstrom $i_{Ref}$ ein rein kapazitiver Strom ist, weist er keinen Gleichanteil auf. Ein eventueller Gleichanteil im Zeitverlauf des Differenzstromes $i_\Delta$ * liefert somit keinen Beitrag zur Funktion r($\alpha$). Das bedeutet, dass die Regelung des Kompensationsfaktors m durch einen Gleichanteil im Differenzstrom nicht beeinflusst wird. Eine Trennung von Wechsel- und Gleichanteil im Differenzstrom ist daher für die Kompensation des Ableitstromes nicht erforderlich.

Das vorgeschlagene Verfahren eignet sich nicht nur zur Kompensation des Ableitstromanteils rein sinusförmiger Differenzströme, sondern auch für oberschwingungshaltige Differenzströme. Das Frequenzspektrum des Referenzstromes muss dazu im Bereich der zu kompensierenden Frequenzen dem Frequenzspektrum des Ableitstromes möglichst ähnlich sein, d. h. die spektralen Frequenzanteile der beiden Ströme $i_{\Delta C}$ und $i_{Ref}$ dürfen sich im Bereich der zu kompensierenden Frequenzen nur in der Amplitude unterscheiden. In der Praxis ist diese Forderung erfüllt, wenn

- der Referenzstrom von derselben oder einer im zeitlichen Verlauf dem Augenblickswert proportionalen, d. h. einer im mathematischen Sinn ähnlichen Spannung getrieben wird, die auch den Ableitstrom treibt und

- die Impedanz der Referenzkapazität im Bereich der zu kompensierenden Frequenzen eine, dem Amplitudengang der Ableitimpedanz proportionale und dem Phasengang gleiche Übertragungsfunktion hat.

Das Spektrum des Referenzstromes kann dann im Bereich der zu kompensierenden Frequenzen durch eine reine Amplitudenanpassung in das Spektrum des zu kompensierenden Ableitstromes überführt werden und diesen durch eine inverse Überlagerung auslöschen. Die zur Generierung des Referenzstromes erforderliche Spannungsquelle, welche den Ableitstrom treibt, kann beispielsweise die Netzspannung oder die Ausgangsspannung eines frequenzgesteuerten Betriebsmittels sein.

Die vorrichtungsseitige Lösung der Aufgabe ist dadurch gekennzeichnet, dass sie einen magnetischen Summenstromwandler zum Erfassen eines Differenzstroms aufweist, mit zumindest zwei Wicklungen für zu überwachende Lastströme und mit zumindest einer Wicklung zur Gewinnung eines ungeregelten Differenzstromsignals, wobei dem Summenstromwandler ein Regelkreis zugeordnet ist und wobei in den Regelkreis ein aus zumindest einem Multiplizierer und einem Tiefpassfilter bestehender Phasendetektor zum Ermitteln einer Phasenverschiebung zwischen einem Referenzstromsignal und einem geregelten Differenzstromsignal, ein Multiplizierer für die Steuerung der Amplitude eines Kompensationsstromsignals, ein Invertierer für ein Kompensationsstromsignal und ein Addierer zum Addieren eines invertierten Kompensationsstromsignals zum ungeregelten Differenzstromsignal eingesetzt sind.

Diese Vorrichtung kann das erfindungsgemäße Verfahren mit einer beliebigen Differenzstromerfassungseinheit realisieren, welche ein dem erfassten und ungeregelten Differenzstrom proportionales Signal abgibt. Die einzelnen Bauteile sind für die Durchführung der erfindungsgemäßen Verfahrensschritte erforderlich, um ein Kompensationsstromsignal für die invertierte Addition zum ungeregelten Differenzstromsignal auszubilden.

In einer Ausgestaltung der vorrichtungsseitigen Lösung ist die zum Erfassen des Differenzstromes vorgesehene Differenzstromerfassungseinheit als magnetischer Summenstromwandler ausgeführt, welcher zumindest zwei Wicklungen für zu überwachende Lastströme und zumindest eine Wicklung zur Gewinnung des ungeregelten Differenzstromsignals aufweist.

Für die Addition des Kompensationsstromsignals kann zum ungeregelten Differenzstromsignal vorzugsweise im Summenstromwandler eine weitere Wicklung vorgesehen sein, deren Wicklungssinn dem Wicklungssinn der Wicklung zum Gewinnen des ungeregelten Differenzstromsignals entgegengesetzt ausgerichtet ist. Auf diese Weise sind die Bauteile für die Durchführung des erfindungsgemäßen Verfahrens kompakt innerhalb des Summenstromwandlers anordbar. Separate Invertierungs- oder Addierungsbausteine sind nicht erforderlich.

Alternativ kann vorgesehen sein, dass für das durch die Regelung gewonnene dem Ableitstromanteil des Differenzstromes ähnliche Kompensationsstromsignal eine Anzeige vorgesehen ist. Das Kompensationsstromsignal entspricht im ausgeregelten Zustand des Regelkreises dem Ableitstromanteil. Es kann daher für eine Anzeige verwendet werden.

Zur weiteren Ausbildung der erfindungsgemäßen Vorrichtung kann noch vorgesehen sein, dass in den Regelkreis zumindest ein proportional und integral wirkendes PI - Glied eingesetzt ist. Dieses präzisiert und beschleunigt die Regelung.

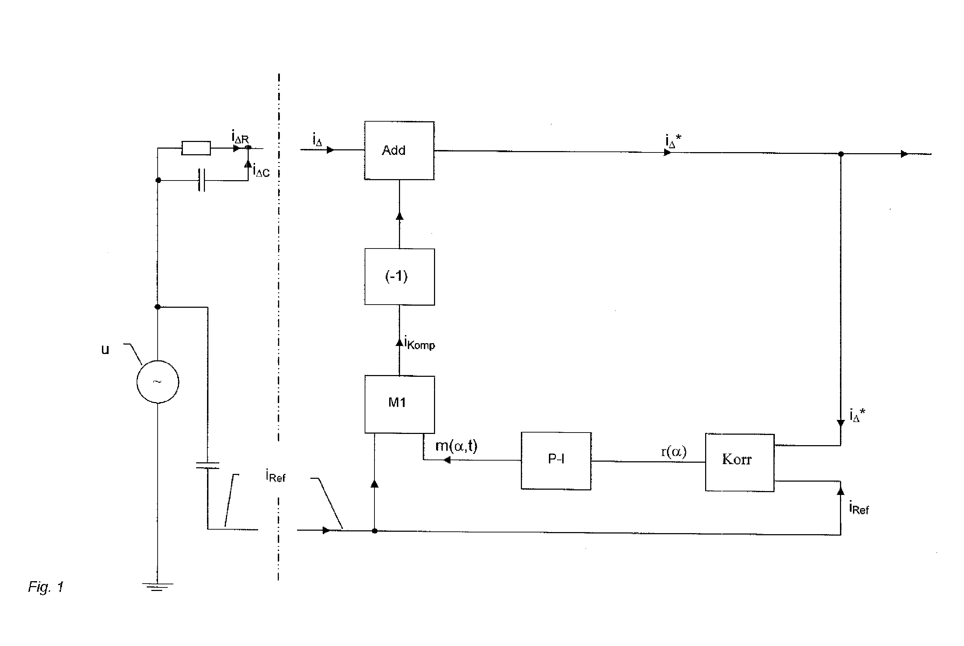

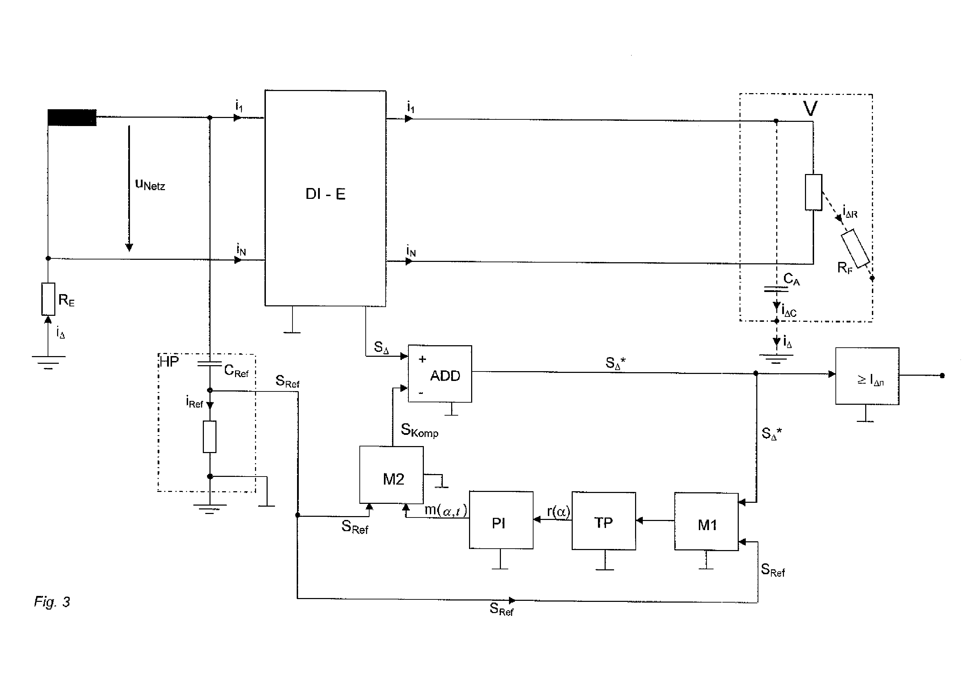

Fig. 3 zeigt als ein Ausführungsbeispiel der Erfindung eine Differenzstromschutz- oder Überwachungseinrichtung, der ein Regelkreis gemäß Fig. 1 zugeordnet ist in einer elektrischen Anlage mit einer geerdeten einphasigen Stromversorgung.

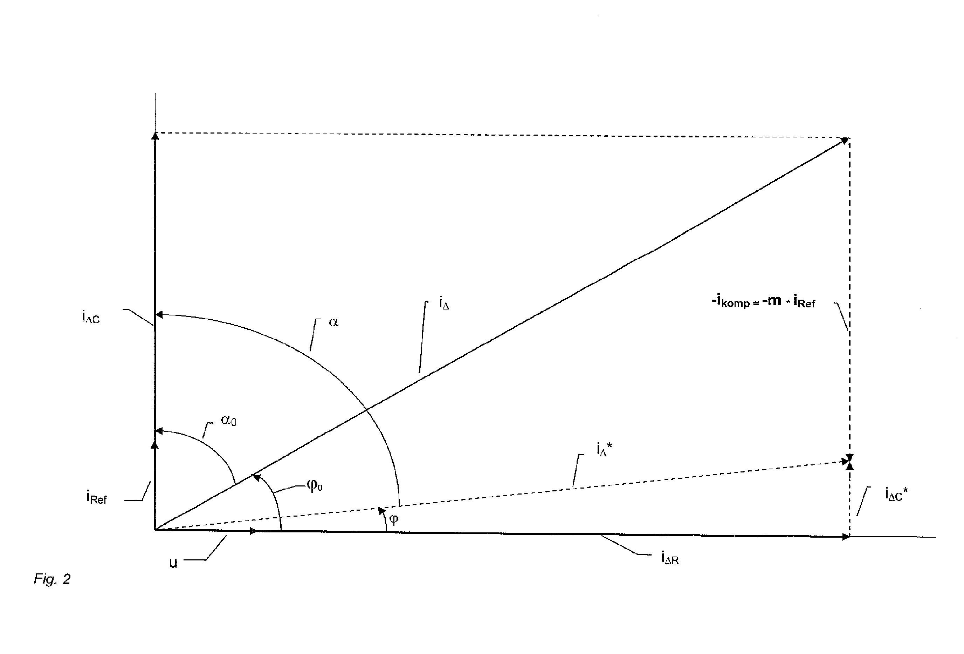

Die Stromversorgung hat die Netzspannung $U_{Netz}$ und die Netzfrequenz $\omega_0$. Von einem defekten Verbraucher V mit der Ableitkapazität $C_A$ und einem widerstandsbehafteten Fehler, dargestellt durch den Widerstand $R_F$, fließt ein Differenzstrom $i_\Delta$ bestehend aus einem ohmschen Anteil, dem Fehlerstrom $i_{\Delta R}$, und einem kapazitiven Anteil, dem Ableitstrom $i_{\Delta C}$, über einen Schutzleiter oder die Erde zum geerdeten Pol der Stromversorgung zurück. Der Wechselanteil des Differenzstromes $i_\Delta$ eilt der Netzspannung um einen Winkel $\phi_0$ voraus (siehe Fig. 2). Die Differenzstromschutz- oder Überwachungseinheit (RCD, bzw. RCM) besitzt eine DifferenzstromErfassungseinrichtung *DI- E*, welche die Differenz der Augenblickswerte aller sie durchfließenden Lastströme erfasst und an ihrem Ausgang ein dem zeitlichen Verlauf des Differenzstromes proportionales Signal $S_\Delta$ abgibt. In einem Additionsbaustein *ADD* wird aus dem ungeregelten Differenzstromsignal $S_\Delta$ ein hinsichtlich seines Blindstromanteils geregeltes Differenzstromsignal $S_\Delta{}^*$, indem ein Kompensationsstromsignal $S_{komp}$ invers addiert wird, welches in seinem zeitlichen Verlauf dem kapazitiven Anteil des Differenzstromes zu Beginn des Regelvorganges proportional verläuft und im ausgeregelten Zustand auch in seiner Höhe dem Ableitstrom $i_{\Delta C}$ entspricht.

Das Kompensationsstromsignal $S_{komp}$ wird dabei wie folgt gewonnen:

Über einen aus einer Referenzkapazität $C_{Ref}$ sowie einem Widerstand bestehenden Hochpass HP mit einer Eckfrequenz $\omega_H \ll \omega_0$, der von dem Netzpotenzial führenden Leiter zu einem geerdeten Leiter geschaltet ist, wird bezüglich der Netzspannung $u_{Netz}$ ein nahezu rein kapazitives Referenzstromsignal $S_{Ref}$ erzeugt. Die Übertragungsfunktion des Hochpasses bildet dabei durch ihre spektrale Frequenzbeeinflussung des Referenzstromsignals die Wirkung der Ableitkapazität $C_A$ auf den Ableitstrom $i_{\Delta C}$ nach.

Beide Signale werden einer Schaltung zur vorzeichenrichtigen Phasendetektion, z. B. einer Korrelatorschaltung bestehend aus einem Multiplizierer M1 und einem nachgeschalteten Tiefpass TP zugeführt. Am Ausgang der Korrelationsschaltung steht abhängig vom

Zeitverschiebungswinkel $\alpha$ zwischen den Signalen $S_\Delta^*$ und $S_{Ref}$ ein Signal gemäß der Beziehung $r(\alpha)= c_1 {}^* \cos\alpha = c_1 {}^* \cos(\Pi/2-\varphi)$ zur Verfügung, wobei $c_1$ ein konstanter Faktor ist, der sich aus den Amplituden der Eingangssignale und einem reellen Übertragungsfaktor der Phasendetektionsschaltung ergibt.

Das Ausgangssignal $r(\alpha)$ des Phasendetektors erzeugt, über ein PI - Glied proportional zu $r(\alpha)$ und abhängig von der Zeit $t$ das Signal $m(\alpha,t)$, welches durch Multiplikation M2 mit dem Referenzstromsignal $S_{Ref}$ die Höhe des Kompensationsstromsignals $S_{kom}p = m {}^* S_{Ref}$ bestimmt. Durch das PI - Glied kann die im realen Betrieb unvermeidbare Regelabweichung so klein gehalten werden, dass die kapazitive Komponente des Differenzstromes für die Auslösung einer RCD nicht mehr von Bedeutung ist. Durch das PI - Glied wird außerdem eine kurze Regelzeit erreicht. Diese ist im Hinblick auf die maximal zulässige Ansprechverzögerung normenkonformer Fehlerstrom-Schutzeinrichtungen von Bedeutung, da nach dem Einschalten der zu schützenden Anlage der kapazitive Differenzstromanteil weitgehend kompensiert sein muss, bevor die RCD anspricht.

Durch eine Subtraktion des Kompensationsstromsignals $S_{komp}$ von dem ungeregelten Differenzstromsignal $S_\Delta$ entsteht dann in einem geschlossenen Regelkreis ein geregeltes Differenzstromsignal $S_\Delta^*$, dessen Winkel $\alpha = \Pi/2-\varphi$ in Bezug auf das Referenzstromsignal $S_{Ref}$ gegen - II / 2 geht, somit in Phase mit der Netzspannung $U_{Netz}$ ist und nur noch dem Wirkanteil $i_{\Delta R}$ des Differenzstromsignals entspricht. Das Signal $S_\Delta^*$ kann dann, wie bei bekannten RCD üblich, hinsichtlich seiner Amplitude mit Referenzwerten verglichen werden, so dass bei Überschreiten einer definierten Fehlerstromhöhe mit einer RCD eine Abschaltung erfolgt. In einer RCM kann es entsprechend dem Fehlerstrom $i_{\Delta R}$ zur Anzeige gebracht werden, oder eine Alarmfunktion auslösen.

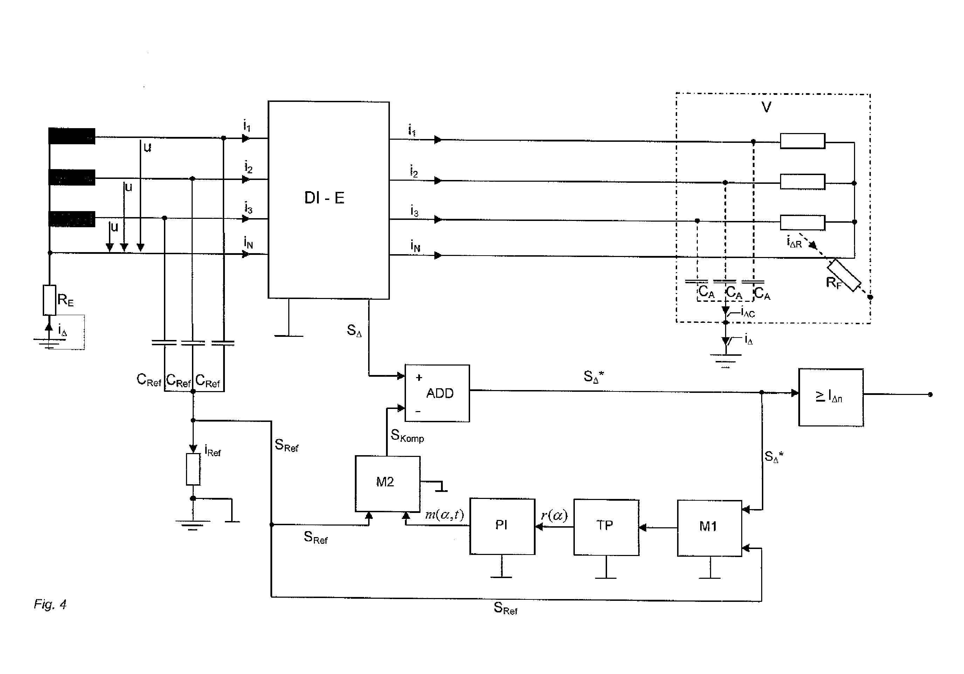

Fig. 4 zeigt eine weitere Ausführung der erfindungsgemäßen Vorrichtung in einem Mehrleiternetz. Weil in solchen Netzen die Ableitkapazitäten zur Erde üblicherweise gleich groß sind, addieren sich die von ihnen getriebenen Ableitströme zu Null, sofern auch alle Außenleiterspannungen gleich groß und rein sinusförmig sind. Aufgrund unsymmetrischer Belastungen oder zunehmender Verwendung von Verbrauchern mit nichtsinusförmiger Stromaufnahme ergeben sich jedoch in der Praxis zunehmend Netze mit verzerrten Leiterspannungen, welche dann Ableitströme über die zwischen jedem Außenleiter und Erde messbaren Kapazitäten zur Folge haben. Um diese Verhältnisse in dem Referenzstrom $i_{Ref}$ abzubilden, wird dieser hier aus allen Außenleitern in vorteilhafter und einfacher Weise über jeweils einen Hochpass mit drei gleich großen Referenzkapazitäten $C_{Ref}$ getrieben. Der Referenzstrom $i_{Ref}$ ergibt sich dabei durch Addition aller Einzelströme, welche durch die Referenzkapazitäten fließen.

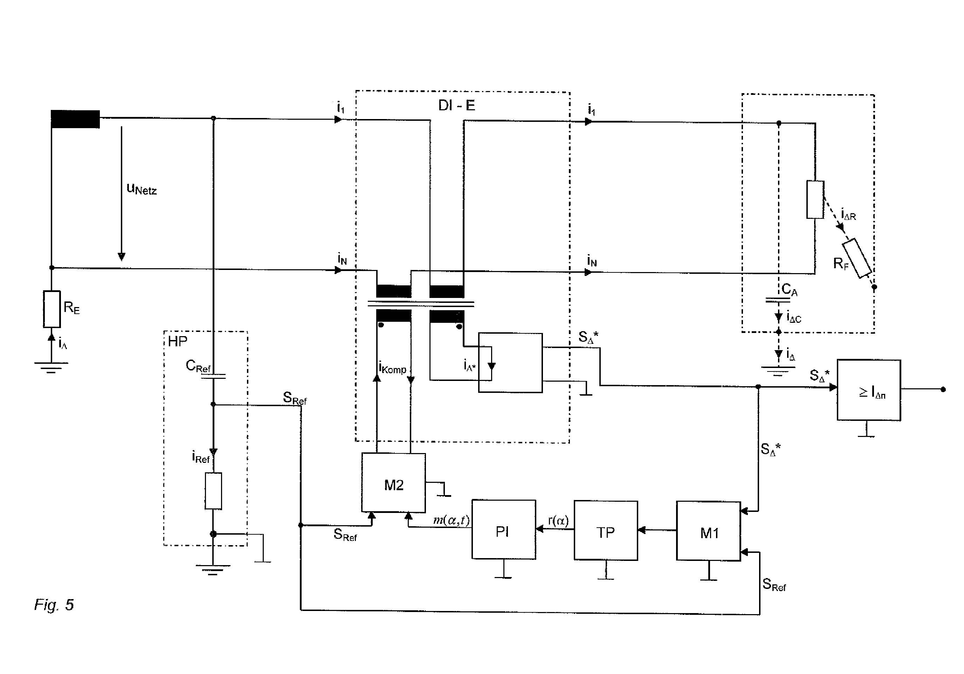

Fig. 5 zeigt eine weitere Ausführung der erfindungsgemäßen Vorrichtung, in welcher die Differenzstromerfassungseinrichtung $DI- E$ als magnetischer Summenstromwandler ausgeführt ist, umfassend zumindest zwei Primärwicklungen für zu überwachende Ströme sowie eine erste Sekundärwicklung zur Gewinnung des ungeregelten Differenzstromsignals $S_\Delta$ und eine zweite Sekundärwicklung zur Beaufschlagung des Kompensationsstromes $i_{Komp}$. Die Kompensation, erfolgt bei dieser Ausführung der erfindungsgemäßen Vorrichtung durch die magnetische Verkopplung des Kompensationsstromes und des ungeregelten Differenzstromes somit im magnetischen Kern des Summenstromwandlers, so dass auf einen Addierbaustein und einen Invertierungsbaustein verzichtet werden kann. Dadurch wird der Summenstromwandler in vorteilhafter Weise nur vom ohmschen Fehlerstromanteil des erfassten Differenzstromes magnetisiert.

In einer weiteren Ausgestaltung der erfindungsgemäßen Vorrichtung ist vorgesehen, dass der Kompensationsstrom $i_{Kom}p$ zur Anzeige gebracht wird oder zu Abschalt- oder Alarmzwecken ausgewertet wird. Der Kompensationsstrom $i_{Komp}$ stellt im eingeschwungenen Zustand des Regelkreises in gleicher Höhe und Phasenlage ein Abbild des kapazitiven Ableitstromes $i_{\Delta c}$ dar.

**Patentansprüche**

**1.** Verfahren zum Kompensieren von durch Kapazitäten hervorgerufenen Ableitströmen als Anteile in Strömen, die in einer Differenzstromschutz- oder Überwachungseinrichtung überwacht werden, **dadurch gekennzeichnet,** **dass** in einem geschlossenen Regelkreis aus dem zu überwachenden Strom $i_\Delta$ und einem von der den Ableitstrom $i_{\Delta C}$ treibenden Spannung $u$ getriebenen Referenzstrom $i_{Ref}$ ein Kompensationsstrom $i_{komp}$ gebildet wird, welcher durch den Regelvorgang auf die Amplitudenhöhe des kapazitiven Anteils im ungeregelten Differenzstrom $i_\Delta$ t. angepasst ist und mit entgegengesetztem Vorzeichen dem ungeregelten Differenzstrom $i_\Delta$ hinzugefügt wird, wobei der Referenzstrom $i_{Ref}$ und der geregelte Differenzstrom $i_\Delta^*$ Eingangssignale eines Phasendetektors *Korr* sind, dessen Ausgangssignal $r(\alpha)$ abhängig vom Zeitverschiebungswinkel $\alpha$ zwischen beiden Eingangssignalen ist und einer stetig und monoton fallenden Funktion folgt, welche bei einem Wert $\dfrac{\Pi}{2}$ des Zeitverschiebungswinkels $\alpha$ eine Nullstelle ungerader Ordnung besitzt und bei einem Wert 0 ein Maximum aufweist und bei einem Wert $\Pi$ ein Minimum annimmt.

**2.** Verfahren nach Anspruch 1, **dadurch gekenn-**

**zeichnet, dass** für die stetig und monoton fallende Funktion eine Funktion nach der Formel $r(\alpha) = c * cos(\alpha)$ eingestellt wird.

3. Verfahren nach einem der Ansprüche 1 oder 2, **dadurch gekennzeichnet, dass** zur Gewinnung einer zeitproportionalen Stellgröße dem Phasendetektor *Korr* ein PI - Glied *PI* nachgeschaltet wird.

4. Verfahren nach einem der vorhergehenden Ansprüche, **dadurch gekennzeichnet, dass** für die Generierung des Referenzstromes $i_{Ref}$ ein Hochpass HP mit zumindest einer Referenzkapazität $C_{Ref}$ verwendet wird.

5. Verfahren nach einem der vorhergehenden Ansprüche, **dadurch gekennzeichnet, dass** in einem Mehrleiternetz der Referenzstrom $iR_{ef}$ aus allen Leitern, die gegenüber dem geerdeten Schutzleiter Spannung u führen, durch jeweils einen Hochpass HP mit zumindest einer Referenzkapazität $C_{Ref}$ gewonnen wird.

6. Differenzstromschutz- oder Überwachungseinrichtung zur Durchführung des Verfahrens nach einem der Ansprüche 1 bis 5, **dadurch gekennzeichnet, dass** sie einen magnetischen Summenstromwandler zum Erfassen eines Differenzstroms $i_\Delta$ aufweist, mit zumindest zwei Wicklungen für zu überwachende Lastströme $i_1, iN$ und mit zumindest einer Wicklung zur Gewinnung eines ungeregelten Differenzstromsignals $S_\Delta$, wobei dem Summenstromwandler ein Regelkreis zugeordnet ist und wobei in den Regelkreis ein aus zumindest einem Multiplizierer *M1* und zumindest einem Tiefpassfilter TP bestehender Phasendetektor *Korr* zum Ermitteln einer Phasenverschiebung $\alpha$ zwischen einem Referenzstromsignal $S_{Ref}$ und einem geregelten Differenzstromsignal $S_\Delta^*$, ein Multiplizierer M2 für die Steuerung der Amplitude eines Kompensationsstromsignals $S_{komp}$, ein Invertierer (-1) für ein Kompensationsstromsignal $S_{komp}$ und ein Addierer *ADD* zum Addieren eines invertierten Kompensationsstromsignals zum ungeregelten Differenzstromsignal $S_\Delta$ eingesetzt sind.

7. Differenzstromschutz- oder Überwachungseinrichtung nach Anspruch 6, **dadurch gekennzeichnet, dass** für die Addition des Kompensationsstromes $S_{komp}$ zum ungeregelten Differenzstromsignal $S_\Delta$ im Summenstromwandler eine weitere Wicklung vorgesehen ist, deren Wicklungssinn dem Wicklungssinn der Wicklung zum Gewinnen eines ungeregelten Differenzstromsignals $S_\Delta$ entgegengesetzt ausgerichtet ist.

8. Differenzstromschutz- oder Überwachungseinrichtung nach Anspruch 6 oder 7, **dadurch gekenn-**

**zeichnet, dass** für den durch die Regelung gewonnenen und gegenüber dem Ableitstromanteil $i_{\Delta c}$ des zu überwachenden Differenzstromes $i_\Delta$ im eingeschwungenen Zustand gleichen Kompensationsstrom $i_{komp}$ eine Anzeige vorgesehen ist.

9. Differenzstromschutz- oder Überwachungseinrichtung nach einem der Ansprüche 6 bis 8, **dadurch gekennzeichnet, dass** in den Regelkreis zumindest ein
PI - Glied *PI* eingesetzt ist.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19826410